# EUROPEAN PATENT SPECIFICATION

(11) **EP 4 354 193 B1**
(45) Date of publication and mention of the grant of the patent: **25.02.2026**
(21) Application number: 22848280.8
(22) Date of filing: 14.07.2022
(51) Int. Cl.: G02B 7/04, H04N 23/00, G02B 7/10, G02B 27/64, H04N 23/51, H04N 23/55, H04N 23/57, G02B 7/02

(54) **DRIVING APPARATUS, CAMERA MODULE, AND ELECTRONIC DEVICE**
ANTRIEBSVORRICHTUNG, KAMERAMODUL UND ELEKTRONISCHE VORRICHTUNG
APPAREIL D'ENTRAÎNEMENT, MODULE DE CAMÉRA ET DISPOSITIF ÉLECTRONIQUE

(30) Priority: 29.07.2021 CN 202110866603
(43) Date of publication of application: 17.04.2024
(73) Proprietor: Huawei Technologies Co., Ltd., Longgang Shenzhen, Guangdong 518129 (CN)
(72) Inventor: WANG, Wei, Shenzhen, Guangdong 518129 (CN); LI, Dengfeng, Shenzhen, Guangdong 518129 (CN); CHEN, Shi, Shenzhen, Guangdong 518129 (CN)
(74) Representative: Thun, Clemens
(86) International application number: PCT/CN2022/105616
(87) International publication number: WO 2023/005675

(56) References cited:
- CN-A- 101 029 961
- CN-A- 101 329 435
- CN-A- 103 293 628
- CN-A- 112 616 000
- CN-A- 112 616 000
- JP-A- 2016 157 031
- JP-A- H09 133 850
- JP-A- H09 133 850

## Description

This application claims priority to Chinese Patent Application No. 202110866603.X, filed with the China National Intellectual Property Administration on July 29, 2021 and entitled "DRIVE APPARATUS, CAMERA MODULE, AND ELECTRONIC DEVICE'.

### TECHNICAL FIELD

This application relates to the field of shooting technologies, and in particular, to a drive apparatus, a camera module, and an electronic device.

### BACKGROUND

To improve competitiveness of a terminal device such as a mobile phone or a tablet computer, a camera module that integrates a zoom function has become a standard configuration of the terminal device currently. By using the camera module, a function of long-distance shooting with a long focal length and a function of wide-angle shooting with a short focal length may be implemented, thereby meeting shooting requirements of a user in a plurality of scenarios. To implement the zoom function, a motor configured to drive a lens to move is usually configured in the camera module. The motor carries and drives the lens to move along an optical axis of the camera module, to implement zoom. Because a frictional surface between the lens and a guide rod changes, stroke accuracy of the motor is poor, a dynamic tilt angle of the drive is excessively large, and the motor drive is even stuck. This seriously affects shooting effect of the camera module, and causes a functional failure.
Further, JP H09 133850 A refers to a lens barrel. Further, CN 112 616 000 A refers to a driving device, a camera module and an electronic equipment.

### SUMMARY

Embodiments of this application provide a drive apparatus, a camera module, and an electronic device. A transmission assembly is disposed between the drive apparatus and a lens group assembly, so that the drive apparatus is decoupled from the lens group assembly in a direction other than an optical axis direction of the camera module, to prevent a case in which a dynamic tilt angle of a drive is excessively large and a motor drive is stuck, and avoid that shooting effect of the camera module is affected. This problem is solved by the subject matter of the independent claims. Further implementation forms are provided in the dependent claims.

According to a first aspect, an embodiment of this application provides a drive apparatus according to claim 1. The drive apparatus is used in a camera module, the camera module includes a plurality of lens group assemblies, and the drive apparatus includes: a drive part, a move part, and a transmission assembly. The drive part is configured to provide a driving force, to drive the move part to move along an optical axis direction of the camera module, and the transmission assembly is in a transmission connection to the move part and at least one of the plurality of lens group assemblies, so that relative locations of the move part and the at least one lens group assembly in the optical axis direction of the camera module are fixed, and the move part and the at least one lens group assembly may move relative to each other in another direction.

According to the drive apparatus provided in this application, the transmission assembly is disposed between the move part and the lens group assembly, so that the move part of the drive apparatus is decoupled from the lens group assembly in a direction other than the optical axis direction of the camera module, to prevent a case in which the move part and the lens group assembly are stuck because a moving direction of the move part deviates from the optical axis direction of the camera module.

The transmission assembly includes a connecting arm, a connecting part, and a connecting rod. An extension direction of the connecting arm is the same as the optical axis direction of the camera module, one end in the extension direction of the connecting arm is fixedly connected to the move part, and the other end extends to a side away from the move part. An elastic structure is disposed on the connecting arm, the elastic structure may generate elastic deformation in an extension direction of the connecting rod, and one end of the connecting rod is fixedly connected to the elastic structure. The connecting part is disposed corresponding to the connecting arm, one end is fixedly connected to the at least one lens group assembly, and a positioning hole is disposed on the connecting part. The other end of the connecting rod penetrates the positioning hole.

In this embodiment of this application, the transmission apparatus includes the connecting arm, the connecting part with the positioning hole, and the connecting rod, so that on a basis of implementing a transmission connection between the drive apparatus and the lens group assembly to drive the lens group assembly to move, the elastic structure may absorb a deviation of the drive apparatus in a direction perpendicular to the optical axis direction of the camera module, and decouple a movement of the drive apparatus from a movement of the camera module in the direction.

In another possible implementation, the elastic structure is an arc-shaped ridge structure on the connecting arm. The connecting arm includes a straight part and the arc-shaped ridge structure; and when the arc-shaped ridge structure generates elastic deformation, a top of the arc-shaped ridge structure may move between the top of the arc-shaped ridge structure and a plane on which the straight part is located. One end of the connecting rod is fixedly disposed on the top of the arc-shaped ridge structure. The arc-shaped ridge structure on the connecting arm is used as an elastic structure, to simplify the elastic structure.

In another possible implementation, a limit structure is disposed on an outer wall surface of the connecting rod, and protrudes from the outer wall surface of the connecting rod, and an outer wall surface of the limit structure abuts against the connecting part, to limit a length of the connecting rod that penetrates the positioning hole.

In another possible implementation, the limit structure is a tapered protrusion structure protruding from the outer wall surface of the connecting rod, and a cross-sectional area of the tapered protrusion structure gradually increases from one end close to the connecting part to one end close to the connecting arm.

In another possible implementation, the outer wall surface of the connecting rod closely abuts against an inner wall surface of the positioning hole in the optical axis direction of the camera module. In this way, drive accuracy of the drive apparatus for the lens group assembly is implemented, and drive hysteresis is eliminated.

In another possible implementation, the positioning hole is an oblong hole, an extension direction of the oblong hole is perpendicular to the optical axis direction of the camera module, and the connecting rod slidably cooperates with the oblong hole in the extension direction of the oblong hole. In this way, the movement of the drive apparatus is decoupled from a movement of the lens group assembly in the direction other than the optical axis direction of the camera module.

According to a second aspect, an embodiment of this application provides a camera module according to claim 7. The camera module includes a plurality of lens group assemblies, at least one drive apparatus according to the first aspect, at least one first guide piece, and at least one second guide piece. The drive apparatus is configured to drive at least one of the plurality of lens group assemblies to move along an optical axis direction of the camera module. The first guide piece is disposed extending along the optical axis direction of the camera module, and is configured to guide the at least one lens group assembly to move along the optical axis direction of the camera module. The second guide piece is disposed extending along the optical axis direction of the camera module, and is configured to guide a move part of the drive apparatus to move along the optical axis direction of the camera module.

According to the camera module provided in this embodiment of this application, a guide architecture including the first guide piece and the second guide piece is disposed to separately guide the lens group assembly and the drive apparatus to move along the optical axis direction of the camera module. A transmission assembly of the drive apparatus decouples a movement of the drive apparatus from a movement of the lens group assembly in a non-optical axis direction, to absorb a tolerance caused by that the first guide piece is not parallel to the second guide piece. This avoids a problem that the drive apparatus is stuck due to a long-stroke movement. Drive accuracy of the drive apparatus and location accuracy of the lens group assembly during a moving process are ensured without hysteresis, and a guide piece of the drive apparatus does not need to be removed on a basis of ensuring drive accuracy and reliability. This simplifies an assembly process and ensures consistency of calibration of the drive apparatus.

In another possible implementation, the at least one first guide piece includes two first guide rods that are disposed in parallel to each other, two first connecting holes that adapt to the two first guide rods are disposed on the at least one lens group assembly, and the two first guide rods penetrate the two first connecting holes, to implement slidable cooperation between the at least one lens group assembly and the two first guide rods. The at least one second guide piece includes two second guide rods that are disposed in parallel to each other, two second connecting holes that adapt to the two second guide rods are disposed on the move part of the at least one drive apparatus, and the two second guide rods penetrate the two second connecting holes, to implement slidable cooperation between the move part of the at least one drive apparatus and the two second guide rods. In this way, the two first guide rods and the two second guide rods form a four-guide-rod guide architecture, to guide the lens group assembly and the drive apparatus to move along the optical axis direction of the camera module, and ensure structural reliability of the guide architecture.

In another possible implementation, the at least one first guide piece includes a first guide rod and a first ball that are disposed in parallel to each other, and the first ball includes a plurality of balls disposed along the optical axis direction of the camera module, and a first connecting hole that adapts to the first guide rod and a first slot rolling that adapts to the first ball are separately disposed on the at least one lens group assembly, the first guide rod penetrates the first connecting hole, and the first ball is in rolling contact with the first slot rolling. The at least one second guide piece includes a second guide rod and a second ball that are disposed in parallel to each other, and the second ball includes a plurality of balls disposed along the optical axis direction of the camera module, and a second connecting hole that adapts to the second guide rod and a second slot rolling that adapts to the second ball are separately disposed on the move part of the at least one drive apparatus, the second guide rod penetrates the second connecting hole, and the second ball is in rolling contact with the second slot rolling. The first guide rod and the second guide rod are disposed on a same side of the at least one lens group assembly.

In another possible implementation, a groove structure is formed on a side that is of the move part of the at least one drive apparatus and that is close to the at least one lens group assembly, and the at least one lens group assembly is partially or completely disposed in the groove structure. The groove structure is disposed on the move part of the drive apparatus to form an avoidance groove, so that the lens group assembly may be partially or completely accommodated in the groove structure, and a structure of the camera module is compact, thereby implementing a light and thin design of the camera module.

In another possible implementation, the at least one lens group assembly includes a zoom lens group assembly and a focus lens group assembly, and the at least one drive apparatus includes a zoom drive apparatus configured to drive the zoom lens group assembly to move, and a focus drive apparatus configured to drive the focus lens group assembly to move; and the camera module further includes: a locking structure, configured to lock a move part of the zoom drive apparatus when the zoom drive apparatus stops working.

According to the camera module in this embodiment of this application, the locking structure is disposed to ensure that the move part of the drive apparatus is fixed at a specific location when the drive apparatus does not work, to prevent the move part of the drive apparatus from shaking, and consequently causing problems such as an abnormal impact sound and impact dust when the camera module is impacted or shakes.

According to a third aspect, an embodiment of this application provides an electronic device according to claim 12. The electronic device includes the drive apparatus according to the first aspect and the camera module according to the second aspect.

According to the electronic device provided in this embodiment of this application, the drive apparatus in the first aspect and the camera module in the second aspect are assembled, so that the drive apparatus accurately drives a zoom lens group and a focus lens group of the camera module, to implement good zoom and focus effect of the camera module, and further enable the electronic device to have high-quality shooting effect.

### BRIEF DESCRIPTION OF DRAWINGS

The following briefly describes accompanying drawings that need to be used in descriptions of embodiments or the conventional technology.
FIG. 1 is an exploded view of a camera module according to an embodiment of this application;
FIG. 2 is a schematic diagram of a structure of a camera module according to an embodiment of this application;
FIG. 3 is a top view of a camera module according to an embodiment of this application;
FIG. 4 is a sectional view of a camera module along a plane on which a focus lens group assembly is located according to an embodiment of this application;
FIG. 5 and FIG. 6 are schematic diagrams of a connecting arm 61 and a connecting rod 62 that are of a transmission assembly 60 and that are disposed on a move part 212;
FIG. 7 is a schematic diagram of a connecting part 63 that is of a transmission assembly 60 and that is disposed on a zoom lens group assembly 11;
FIG. 8 is a schematic diagram of a structure of a transmission assembly of a camera module according to an embodiment of this application; and
FIG. 9 is a top view of a transmission assembly of a camera module according to an embodiment of this application.

### DESCRIPTION OF EMBODIMENTS

The following describes technical solutions in embodiments of this application with reference to accompanying drawings in embodiments of this application.

In descriptions of this application, orientations or location relationships indicated by terms "center", "upper", "lower", "front", "rear", "left", "right", "vertical", "horizontal", "top", "bottom", "inner", "outer", and the like are based on orientations or location relationships shown in the accompanying drawings, and are merely intended for ease of describing this application and simplifying descriptions, instead of indicating or implying that a specified apparatus or element needs to have a specific orientation, and be constructed and operated in the specific orientation. Therefore, this cannot be understood as a limitation on embodiments of this application.

In the descriptions of this application, it should be noted that, unless otherwise clearly specified and limited, terms "mount", "link", and "connect" should be understood in a broad sense, for example, may be a fixed connection, may be a detachable connection, or may be a butt joint connection or an integral connection. Persons of ordinary skill in the art may understand specific meanings of the foregoing terms in this application in specific cases.

To implement an automatic zoom function and/or an automatic focus function of a camera module, a drive apparatus configured to drive a zoom lens group and/or a focus lens group to move along an optical axis of the camera module is disposed in the camera module. The drive apparatus includes a drive part and a carrier, the carrier carries the zoom lens group and/or the focus lens group (where for example, the zoom lens group and/or the focus lens group are/is bonded to the carrier through adhesive). The drive part provides a driving force to drive the carrier to move, to drive the zoom lens group and/or the focus lens group to move, and implement the automatic zoom function and/or the automatic focus function of the camera module.

In the conventional technology, to enable a movement of the zoom lens group and/or a movement of the focus lens group to move along the optical axis direction of the camera module, a lens group guide rod extending along the optical axis direction is disposed in the camera module. The zoom lens group and/or the focus lens group are/is sleeved on the lens group guide rod, and slidably cooperate/cooperates with the lens group guide rod. The lens group guide rod guides the zoom lens group and/or the focus lens group to move along the optical axis direction of the camera module, and provides a basis for positioning of the zoom lens group and/or the focus lens group. To enable the carrier of the drive apparatus to move along the optical axis direction of the camera module, a drive guide rod extending along the optical axis direction of the camera module is disposed in the camera module. The carrier is sleeved on the drive guide rod, and completes calibration of the drive apparatus. The drive part of the drive apparatus drives the carrier to move, to drive the zoom lens group and/or the focus lens group to move along the optical axis of the camera module, to implement the automatic zoom function and/or automatic focus function of the camera module.

However, for the camera module in the foregoing technical solution, when the drive guide rod is not parallel to the lens group guide rod due to a mounting error or impact, a non-parallel tolerance between the drive guide rod and the lens group guide rod cannot be absorbed because the carrier is rigidly or quasi-rigidly connected to the zoom lens group and/or the focus lens group. Consequently, a drive of the drive apparatus is stuck, and the automatic zoom function and/or the automatic focus function of the camera module fail/fails.

In another solution, after calibration of the drive apparatus is completed, a drive guide rod is removed, to overcome a problem that the drive guide rod is not parallel to a lens group guide rod. However, after the drive guide rod is removed, in one aspect, because the carrier loses support of the drive guide rod, weight of the carrier and the zoom lens group and/or the focus lens group is concentrated on the lens group guide rod, which increases load of the lens group guide rod, and consequently a friction force of the zoom lens group and/or the focus lens group and the lens group guide rod increases, which affects movement smoothness of the zoom lens group and/or the focus lens group. In another aspect, the calibration of the drive apparatus is performed under a condition of mounting the drive guide rod, and calibration data of the drive apparatus after the drive guide rod is removed is definitely different from calibration data before the drive guide rod is removed, which causes a problem in drive accuracy of the drive apparatus.

An embodiment of this application provides a camera module. A lens group guide rod and a drive guide rod that extend along an optical axis of the camera module are separately disposed, a zoom lens group and/or a focus lens group are/is separately sleeved on the lens group guide rod, and a carrier of a drive apparatus is sleeved on the drive guide rod. The carrier of the drive apparatus is in a transmission connection to the zoom lens group and/or the focus lens group through a transmission assembly, so that relative locations of a move part and at least one lens group assembly in the optical axis direction of the camera module are fixed, and the move part and the at least one lens group assembly may move relative to each other in another direction. A movement of the drive apparatus in a non-optical axis direction is decoupled from a movement of the zoom lens group and/or the focus lens group, and a non-parallel tolerance between the drive guide rod and the lens group guide rod may be absorbed, thereby avoiding that a drive of the drive apparatus is stuck, and ensuring that the camera module has good automatic zoom effect and/or automatic focus effect.

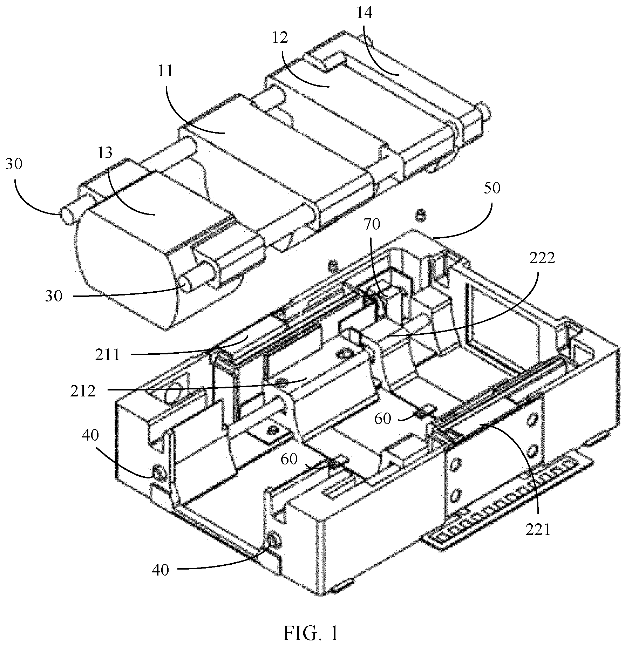

The following describes in detail a structure of a camera module provided in embodiments of this application with reference to FIG. 1 to FIG. 9.

FIG. 1 is an exploded view of a camera module according to an embodiment of this application. As shown in FIG. 1, the camera module includes a housing 50, a plurality of lens group assemblies (for example, a lens group assembly 11, a lens group assembly 12, a lens group assembly 13, and a lens group assembly 14 in FIG. 1), and a drive apparatus (for example, a drive apparatus including a drive part 221 and a move part 222 in FIG. 1).

The housing 50 has an accommodation space. A plurality of supporting parts are disposed on an inner wall of the accommodation space. The plurality of lens group assemblies and the drive apparatus are disposed, through the plurality of supporting parts, in the accommodation space defined by the housing 50.

It is easy to understand that principal optical axes of the plurality of lens group assemblies are disposed in an overlapping manner, and the principal optical axes of the plurality of lens group assemblies are optical axes of the camera module.

The lens group assembly 11 may move along an optical axis direction to implement a zoom function of the camera module. Therefore, the lens group assembly 11 may be referred to as a zoom lens group assembly 11.

To enable the zoom lens group assembly 11 to move along the optical axis direction, a lens group guide rod 30 is disposed in the housing 50. An extension direction of the lens group guide rod 30 is the same as the optical axis direction. The zoom lens group assembly 11 is sleeved on an outer wall of the lens group guide rod 30, and slidably cooperates with the lens group guide rod 30. The lens group guide rod 30 guides the zoom lens group assembly 11 to move along the optical axis direction.

For example, to enable the zoom lens group assembly 11 to move more smoothly in a preset direction (namely, the optical axis direction), a plurality of lens group guide rods 30 may be disposed at intervals. For example, in FIG. 1, two lens group guide rods 30 are distributed in parallel to each other at two opposite ends of the zoom lens group assembly 11, so that the zoom lens group assembly 11 moves along a plane on which the two lens group guide rods 30 are located.

The plurality of lens group assemblies all penetrate the lens group guide rod 30. For example, in FIG. 1, the lens group assembly 11, the lens group assembly 12, the lens group assembly 13, and the lens group assembly 14 all penetrate the lens group guide rod 30, to implement mounting positioning of the plurality of lens group assemblies, and ensure that optical axes of the plurality of lens group assemblies overlap.

A lens group assembly that does not need to move is fixedly assembled with the lens group guide rod 30. For example, in FIG. 1, the lens group assembly 13 and the lens group assembly 14 are fixedly sleeved on the lens group guide rod 30.

Any one of the plurality of lens group assemblies includes a lens group holder and at least one lens. The lens is fixedly disposed in the lens group holder. The lens may be fixedly connected to the lens group holder in a plurality of manners, for example, clamping, screwing, or gluing. An appropriate connecting manner may be selected based on an actual case. A manner of connecting the lens to a lens holder is not limited in this embodiment of this application.

A penetration hole is disposed on the lens holder. The penetration hole penetrates the lens group guide rod, to implement mounting of the lens group assembly and the lens group guide rod.

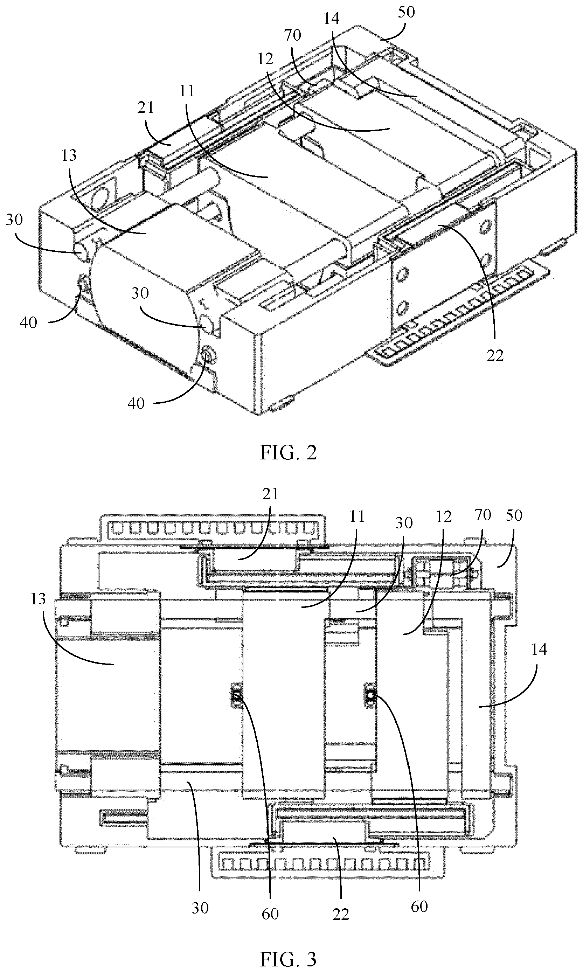

As shown in FIG. 2, the camera module includes a drive apparatus 21, configured to drive the zoom lens group assembly 11 to move. The drive apparatus 21 is disposed at a location corresponding to the zoom lens group assembly 11 on the housing 50, and drives the zoom lens group assembly 11 to move back and forth along the optical axis direction, to implement automatic zoom.

Still refer to FIG. 1. The drive apparatus 21 includes a drive part 211, a move part 212, and a transmission assembly 60. The drive part 211 is fixedly mounted on an inner wall of the housing 50. The move part 212 may move along the optical axis direction. The drive part 211 provides a driving force to drive the move part 212 to move. The transmission assembly 60 is in a transmission connection to the move part 212 and the zoom lens group assembly 11. The move part 212 drives the zoom lens group assembly 11 to move, to implement automatic zoom of the camera module.

To enable the move part 212 to move along the optical axis, the camera module further includes a drive guide rod 40. The drive guide rod 40 extends along the optical axis direction. The move part 212 is sleeved on the drive guide rod 40, and slidably cooperates with the drive guide rod 40. The drive guide rod 40 guides the move part to move along the optical axis direction.

For example, to enable the move part 212 to move more smoothly in the preset direction (namely, the optical axis direction), a plurality of drive guide rods 40 may be disposed at intervals. For example, in FIG. 1, two drive guide rods 40 are distributed in parallel to each other at two opposite ends of the move part 212, so that the move part 212 moves along a plane on which the two drive guide rods 40 are located.

It is easy to understand that the lens group guide rod and the drive guide rod are only an implementation of a guide piece for separately guiding the lens group assembly and the move part of the drive apparatus to move along the optical axis direction. The guide piece may have a plurality of implementations. For example, the guide piece may be a guide extending along the optical axis direction. A guide rail that adapts to the guide is disposed on the lens group assembly and/or the move part. The guide slidably cooperates with the guide rail, to guide the lens group assembly and/or the move part to move along the optical axis direction. Alternatively, the guide piece may be a ball assembly disposed along the optical axis direction. The ball assembly includes a plurality of balls extending along the optical axis direction. A slot rolling that adapts to the ball assembly is disposed on the lens group assembly and/or the move part. The balls of the ball assembly are in rolling contact with the slot rolling, to guide the lens group assembly and/or the move part to move along the optical axis direction.

A lens group guide piece and a drive guide piece may select a same guide piece. For example, both the lens group guide piece and the drive guide piece may be guide rods. The lens group guide piece and the drive guide piece may alternatively be different guide pieces. For example, the lens group guide piece is a lens group guide rod, and the drive guide piece is a drive guide.

A plurality of lens group guide pieces may be same guide pieces, and a plurality of drive guide pieces may be same guide pieces. For example, the plurality of lens group guide pieces are all lens group guide rods, and the plurality of drive guide pieces are all drive guide rods.

Alternatively, a plurality of lens group guide pieces are different guide pieces, and a plurality of drive guide pieces are different guide pieces. For example, one of two lens group guide pieces is a lens group guide rod, and the other is a lens group ball; and one of two drive guide pieces is a drive guide rod, and the other is a drive ball. For example, the lens group guide piece includes a lens group guide rod and a lens group ball that are disposed in parallel to each other, and the lens group ball includes a plurality of balls disposed along the optical axis direction of the camera module, and a first connecting hole that adapts to the lens group guide rod and a first slot rolling that adapts to the lens group ball are separately disposed on the zoom lens group assembly, the lens group guide rod penetrates the first connecting hole, and the lens group ball is in rolling contact with the first slot rolling. The drive guide piece includes a drive guide rod and a drive ball that are disposed in parallel to each other, and the drive ball includes a plurality of balls disposed along the optical axis direction of the camera module, and a second connecting hole that adapts to the drive guide rod and a second slot rolling that adapts to the drive ball are separately disposed on the move part of the zoom drive apparatus, the drive guide rod penetrates the second connecting hole, and the drive ball is in rolling contact with the second slot rolling. The lens group guide rod and the drive guide rod are disposed on a same side of the zoom lens group assembly.

An avoidance groove is disposed on a side that is of the move part 212 and that is close to the zoom lens group assembly 11, so that the zoom lens group assembly 11 is partially or completely accommodated in the avoidance groove, and a structure of the camera module is more compact, thereby implementing a light and thin design of the camera module.

It is easy to understand that the housing may be designed in a plurality of shapes and structures based on a requirement. For example, the housing may be of a cuboid structure, and the plurality of lens group assemblies and the drive apparatus are mounted in the housing and are of a cuboid structure (refer to FIG. 2). Alternatively, the housing may be of a cylindrical shape or the like.

Because it is difficult to implement complete parallelism between the drive guide rod and the lens group guide rod during assembly, there is always a non-parallel tolerance. Alternatively, the drive guide rod and the lens group guide rod may be not parallel after the camera module is impacted, and it is very likely that the drive apparatus is stuck in a long-stroke zoom process of the zoom lens group assembly 11. Therefore, a movement of the move part needs to be decoupled from a movement of the zoom lens group assembly in a non-optical axis direction. In other words, the transmission assembly of the drive apparatus transfers only a driving force generated by the drive apparatus in the optical axis direction to the zoom lens group assembly, and absorbs the non-parallel tolerance between the drive guide rod and the lens group guide rod, to ensure that the zoom lens group assembly moves smoothly along the optical axis direction, and implement good automatic zoom effect of the camera module.

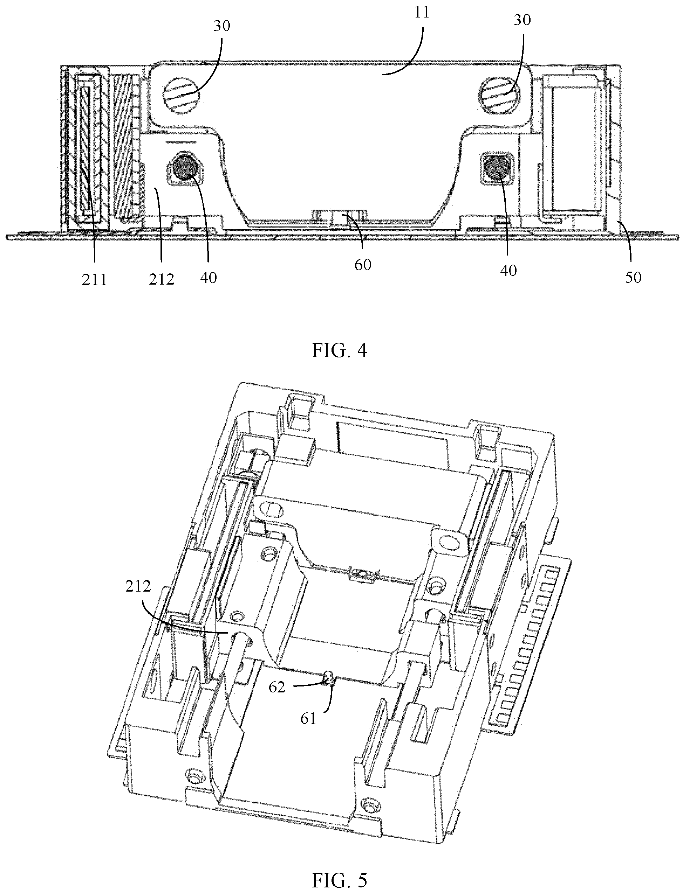

Refer to FIG. 3 and FIG. 4. The transmission assembly 60 is disposed on one side of the zoom lens group assembly 11. The transmission assembly 60 transfers the driving force generated by the drive apparatus in the optical axis direction to the zoom lens group assembly 11, to drive the zoom lens group assembly 11 to move back and forth in the optical axis direction.

It is easy to understand that, in FIG. 3 and FIG. 4, a quantity and a disposition location of the transmission assembly 60 are merely examples, and do not constitute a limitation. The transmission assembly 60 may be disposed on any side of the zoom lens group assembly 11. There may be a plurality of transmission assemblies 60, disposed at intervals on one side of the zoom lens group assembly 11.

The transmission assembly 60 includes a connecting arm, a connecting rod, and a connecting part. The connecting arm is disposed on the move part, and the part is disposed on the zoom lens group assembly. The connecting rod is connected to the connecting arm and the connecting part to implement a transmission connection between the move part and the zoom lens group assembly. The move part transfers a driving force to the zoom lens group assembly through the transmission component formed by the connecting arm, the connecting rod, and the connecting part, to drive the zoom lens group assembly to move.

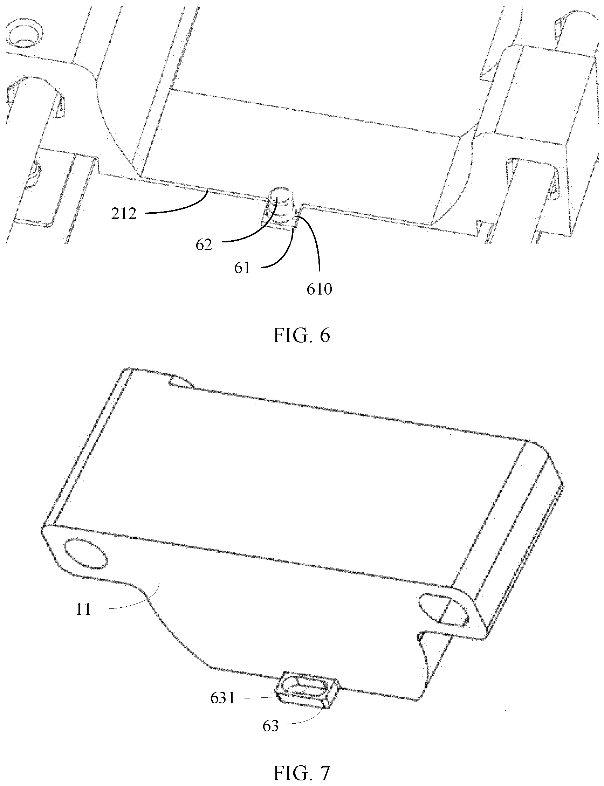

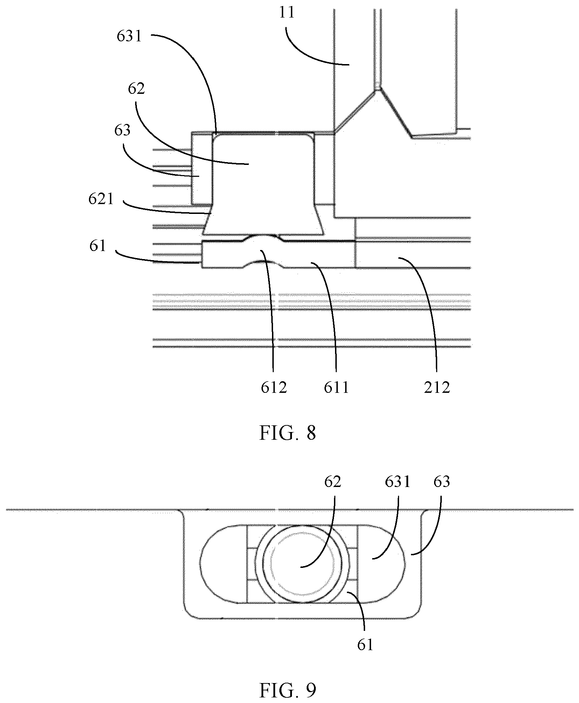

For example, as shown in FIG. 5 and FIG. 6, the connecting arm 61 is disposed at one end of the move part 212 extending in the optical axis direction, and the connecting arm 61 partially or completely extends out of the move part 212. An extension direction of a part that is of the connecting arm 61 and that extends out of the move part 212 is consistent with the optical axis direction. An elastic structure 610 is disposed on the part that is of the connecting arm 61 and that extends out of the move part 212, and one end of the connecting rod 62 is fixedly disposed on the elastic structure 610. As shown in FIG. 7, at one end that is of the zoom lens group assembly 11 and that is close to the move part 212, the connecting part 63 is disposed at a location at which the connecting arm 61 is disposed and that corresponds to the move part 212, and the connecting part 63 partially or completely extends out of the zoom lens group assembly 11 in the optical axis direction. An extension direction of a part that is of the connecting part 63 and that extends out of the zoom lens group assembly 11 is consistent with the optical axis direction. A positioning hole 631 is disposed, on the part that is of the connecting part 63 and that extends out of the zoom lens group assembly 11, corresponding to the elastic structure 610. As shown in FIG. 8, the other end of the connecting rod 62 in an extension direction of the connecting rod 62 penetrates the positioning hole 62. The elastic structure may generate elastic deformation in the extension direction of the connecting rod 62, to absorb a non-parallel tolerance between the drive guide rod and a zoom lens group in the direction. The elastic structure has rigidity in the optical axis direction, to transfer the driving force of the drive apparatus to the zoom lens group assembly 11 in time.

In an example, still refer to FIG. 8. The elastic structure is an arc-shaped ridge structure 612 on the connecting arm 61. The connecting arm 61 includes a straight part 611 and the arc-shaped ridge structure 612. The connecting rod 62 is fixedly disposed on a top of the arc-shaped ridge structure 612. When the top of the arc-shaped ridge structure 612 is subject to down pressure or an up pulling force from the connecting rod 62, the arc-shaped ridge structure 612 generates elastic deformation, so that the top of the arc-shaped ridge structure 612 may move between the top of the arc-shaped ridge structure 612 and a plane on which the straight part 611 is located, to absorb a non-parallel tolerance between the drive guide rod and the zoom lens group assembly in the extension direction of the connecting rod.

Certainly, the arc-shaped ridge structure 612 in FIG. 8 is merely an example of the elastic structure that can be implemented, and does not constitute a limitation on the elastic structure. Another elastic structure that meets a requirement may be used. For example, the elastic structure may include a rigid holder and an elastic structure. One end of the rigid holder is fixedly connected to the connecting arm in an extension direction of the rigid holder, and the other end is disposed close to the positioning hole. The rigid holder includes an accommodation cavity having an opening, and the elastic structure is disposed in the accommodation cavity. An opening end of the rigid holder is disposed toward the positioning hole, and a bottom of the connecting rod is fixedly connected to the elastic structure. When the non-parallel tolerance between the drive guide rod and the zoom lens group assembly in the extension direction of the connecting rod occurs, the elastic structure generates the elastic deformation to absorb the non-parallel tolerance. The rigid holder and the connecting rod transfer the driving force of the drive apparatus to the zoom lens group assembly. Optionally, the elastic structure may be an elastic body or a spring structure.

In an example, a limit structure is disposed on an outer wall surface of the connecting rod 62, and protrudes from the outer wall surface of the connecting rod, and an outer wall surface of the limit structure abuts against the connecting part 63, to limit a length of the connecting rod 62 that penetrates the positioning hole 631, and facilitate assembly of the connecting rod and the positioning hole. When the limit structure of the connecting rod abuts against a lower wall surface of the connecting part 63, it indicates that the connecting rod and the positioning hole are properly mounted.

For example, the limit structure is a tapered protrusion structure 621 on the outer wall surface of the connecting rod 62, and a cross-sectional area of the tapered protrusion structure 621 gradually increases from one end close to the connecting part 63 to one end close to the connecting arm 61 (refer to FIG. 8).

In another example, the limit structure may alternatively be another structure. For example, the limit structure may be an end-stop part disposed on the outer wall surface of the connecting rod, and an upper wall surface of the end-stop part abuts against a lower wall surface of the connecting part, to limit a length of the connecting rod extending into the positioning hole. Alternatively, the limit structure may be a stepped structure protruding from the outer wall surface of the connecting rod, and an upper wall surface of the stepped structure abuts against a lower wall surface of the connecting part, to limit a length of the connecting rod extending into the positioning hole.

In an example, to enable the drive apparatus to drive the zoom lens group assembly without hysteresis, the connecting rod 62 extends into an outer wall surface of the positioning hole 631 and closely abuts against an inner wall surface of the positioning hole 631 in the optical axis direction, to transfer the driving force of the drive apparatus in the optical axis direction to the zoom lens group assembly without hysteresis.

In another example, refer to FIG. 9. The positioning hole 631 is an oblong hole, an extension direction of the oblong hole is perpendicular to the optical axis direction, and the connecting rod 62 slidably cooperates with the oblong hole in the extension direction of the oblong hole, so that a movement of the drive apparatus decouples from the movement of the zoom lens group assembly in the direction. The connecting rod 62 slides in the extension direction of the oblong hole, and absorbs a tolerance between the drive guide rod and the lens group guide rod in the direction.

In another example, the camera module further has an automatic focus function. Refer to FIG. 1 to FIG. 3. The plurality of lens group assemblies further include a lens group assembly 12 having a focus function. The drive apparatus further includes a drive apparatus 22, configured to drive the focus lens group assembly 12 to move along the optical axis. The drive apparatus 22 further includes a transmission assembly 60 that is in a transmission connection with the move part 222 and the focus lens group assembly 12. Assembly of the transmission assembly 60, the move part 222, and the focus lens group assembly 12 is similar to the assembly of the transmission assembly 60, the move part 212, and the zoom lens group assembly 11 described above. Refer to the foregoing descriptions. For brevity, details are not described herein again.

There may be a plurality of types of drive apparatuses described above. For example, the drive apparatus may be a voice coil motor, a stepper motor, a piezoelectric motor, an SMA motor, or the like. An appropriate drive apparatus may be selected based on an actual case. The type of the drive apparatus is not limited in this application.

A same type of drive apparatus may be selected for the zoom drive apparatus and the focus drive apparatus. For example, both the zoom drive apparatus and the focus drive apparatus are voice coil motors. Alternatively, different types of drive apparatuses may be selected for the zoom drive apparatus and the focus drive apparatus. For example, the zoom drive apparatus is a voice coil motor, and the focus drive apparatus is a stepper motor.

For example, both the zoom drive apparatus and the focus drive apparatus are voice coil motors. A first coil/a first magnetic body is disposed on a drive part of the zoom drive apparatus, or a first magnetic body/a first coil is disposed on a move part of the zoom drive apparatus; and a second coil/a second magnetic body is disposed on a drive part of the focus drive apparatus, or a second magnetic body/a second coil is disposed on a move part of the focus drive apparatus. The first magnetic body and the second magnetic body are magnetic metal, for example, an alloy formed by at least two of iron, cobalt, and nickel. A winding groove is disposed on the drive part or the move part, and the first coil or the second coil is wound around the winding groove of the drive part or the move part.

When the camera module needs to perform automatic zoom, the first coil is powered on, and a Lorentz force is generated between the first coil and the first magnetic body. The move part of the zoom drive apparatus moves under an action of the Lorentz force, so that the transmission apparatus drives the zoom lens group assembly to move along the optical axis direction, to implement automatic zoom.

When the camera module performs automatic focus, the second coil is powered on, a Lorentz force is generated between the second coil and the second magnetic body. The move part of the focus drive apparatus moves under an action of the Lorentz force, so that the transmission apparatus drives the focus lens group assembly to move along the optical axis direction, to implement automatic focus, and make a photographed photo or video clearer.

An embodiment of this application further provides an electronic device. The electronic device has the foregoing camera module.

Because the camera module is assembled in the electronic device, a drive apparatus accurately drives a zoom lens group and a focus lens group of the camera module, to implement good zoom and focus effect of the camera module, and further enable the electronic device to have high-quality shooting effect.

The electronic device includes but is not limited to an electronic device having a shooting function, such as a mobile phone, a tablet computer, a wearable device, a notebook computer, an ultra-mobile personal computer (ultra-mobile personal computer, UMPC), a handheld computer, a personal digital assistant (personal digital assistant, PDA), an event data recorder, or a virtual reality device.

In the descriptions of this specification, specific features, structures, materials, or characteristics may be combined in a proper manner in any one or more of embodiments or examples.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, or make equivalent replacements to some technical features thereof.

## Claims

1. A drive apparatus (21, 22), used in a camera module, wherein the camera module comprises a plurality of lens group assemblies (11, 12, 13, 14) and the drive apparatus comprises:
∘ a drive part (211, 221), configured to provide a driving force;
∘ a move part (212, 222), moving along an optical axis direction of the camera module under an action of the driving force; and
∘ a transmission assembly (60), configured to be in a transmission connection to the move part (212, 222) and at least one of the plurality of lens group assemblies (11, 12, 13, 14), so that relative locations of the move part (212, 222) and the at least one lens group assembly in the optical axis direction of the camera module are fixed,
wherein the transmission assembly (60) comprises:
∘ a connecting arm (61), wherein an extension direction of the connecting arm (61) is the same as the optical axis direction of the camera module, one end in the extension direction of the connecting arm (61) is fixedly connected to the move part (212, 222) and the other end extends to a side away from the move part (212, 222);
∘ a connecting part (63), wherein the connecting part (63) is disposed corresponding to the connecting arm (61), one end is fixedly connected to the at least one lens group assembly, and a positioning hole (631) is disposed on the connecting part (63); and
∘ a connecting rod (62), wherein one end in an extension direction of the connecting rod (62) is fixedly connected to the connecting arm (61), and the other end penetrates the positioning hole (631),
wherein
∘ an elastic structure is disposed on the connecting arm (61), the elastic structure may generate elastic deformation in the extension direction of the connecting rod (62), and one end of the connecting rod (62) is fixedly connected to the elastic structure.

2. The drive apparatus according to claim 1, wherein the elastic structure is an arc-shaped ridge structure (612) on the connecting arm;
the connecting arm comprises a straight part (611) and the arc-shaped ridge structure;
and when the arc-shaped ridge structure generates elastic deformation, a top of the arc-shaped ridge structure may move between the top of the arc-shaped ridge structure and a plane on which the straight part is located; and
one end of the connecting rod is fixedly disposed on the top of the arc-shaped ridge structure.

3. The drive apparatus according to claim 1 or 2, wherein a limit structure (621) is disposed on an outer wall surface of the connecting rod, and protrudes from the outer wall surface of the connecting rod, and an outer wall surface of the limit structure abuts against the connecting part, to limit a length of the connecting rod that penetrates the positioning hole.

4. The drive apparatus according to claim 3, wherein the limit structure is a tapered protrusion structure protruding from the outer wall surface of the connecting rod, and a cross-sectional area of the tapered protrusion structure gradually increases from one end close to the connecting part to one end close to the connecting arm.

5. The drive apparatus according to any one of claims 1 to 4, wherein the outer wall surface of the connecting rod closely abuts against an inner wall surface of the positioning hole in the optical axis direction of the camera module.

6. The drive apparatus according to any one of claims 1 to 5, wherein the positioning hole is an oblong hole, an extension direction of the oblong hole is perpendicular to the optical axis direction of the camera module, and the connecting rod slidably cooperates with the oblong hole in the extension direction of the oblong hole.

7. A camera module, comprising:
• a plurality of lens group assemblies (11, 12, 13, 14);
• at least one drive apparatus (21, 22) according to any one of claims 1 to 6, configured to drive at least one of the plurality of lens group assemblies (11, 12, 13, 14) to move along an optical axis direction of the camera module;
• at least one first guide piece (30), disposed extending along the optical axis direction of the camera module, and configured to guide the at least one lens group assembly to move along the optical axis direction of the camera module; and
• at least one second guide piece (40), disposed extending along the optical axis direction of the camera module, and configured to guide a move part of the drive apparatus to move along the optical axis direction of the camera module.

8. The camera module according to claim 7, wherein the at least one first guide piece comprises two first guide rods that are disposed in parallel to each other, two first connecting holes that adapt to the two first guide rods are disposed on the at least one lens group assembly, and the two first guide rods penetrate the two first connecting holes, to implement slidable cooperation between the at least one lens group assembly and the two first guide rods; and
the at least one second guide piece comprises two second guide rods that are disposed in parallel to each other, two second connecting holes that adapt to the two second guide rods are disposed on the move part of the at least one drive apparatus, and the two second guide rods penetrate the two second connecting holes, to implement slidable cooperation between the move part of the at least one drive apparatus and the two second guide rods.

9. The camera module according to claim 7, wherein the at least one first guide piece comprises a first guide rod and a first ball group that are disposed in parallel to each other, and the first ball group comprises a plurality of balls disposed along the optical axis direction of the camera module; and a first connecting hole that adapts to the first guide rod and a first slot rolling that adapts to the first ball group are separately disposed on the at least one lens group assembly, the first guide rod penetrates the first connecting hole, and the first ball group is in rolling contact with the first slot rolling; and
the at least one second guide piece comprises a second guide rod and a second ball group that are disposed in parallel to each other, and the second ball group comprises a plurality of balls disposed along the optical axis direction of the camera module; and a second connecting hole that adapts to the second guide rod and a second slot rolling that adapts to the second ball group are separately disposed on the move part of the at least one drive apparatus, the second guide rod penetrates the second connecting hole, and the second ball group is in rolling contact with the second slot rolling, wherein
the first guide rod and the second guide rod are disposed on a same side of the at least one lens group assembly.

10. The camera module according to any one of claims 7 to 9, wherein a groove structure is formed on a side that is of the move part of the at least one drive apparatus and that is close to the at least one lens group assembly, and the at least one lens group assembly is partially or completely disposed in the groove structure.

11. The camera module according to any one of claims 7 to 10, wherein the at least one lens group assembly comprises a zoom lens group assembly and a focus lens group assembly, and the at least one drive apparatus comprises a zoom drive apparatus configured to drive the zoom lens group assembly to move, and a focus drive apparatus configured to drive the focus lens group assembly to move; and
the camera module further comprises:
a locking structure, configured to lock a move part of the zoom drive apparatus when the zoom drive apparatus stops working.

12. An electronic device, comprising the drive apparatus according to any one of claims 1 to 6 and the camera module according to any one of claims 7 to 11.

## Patentansprüche

1. Antriebsvorrichtung (21, 22) zum Verwenden in einem Kameramodul, wobei das Kameramodul eine Vielzahl von Linsengruppenbaugruppen (11, 12, 13, 14) umfasst und die Antriebsvorrichtung umfasst:
ein Antriebsteil (211, 221), das dazu konfiguriert ist, eine Antriebskraft bereitzustellen;
ein Bewegungsteil (212, 222), das sich unter Einwirkung der Antriebskraft entlang einer Richtung einer optischen Achse des Kameramoduls bewegt; und
eine Übertragungsbaugruppe (60), die so konfiguriert ist, dass sie in einer Übertragungsverbindung mit dem Bewegungsteil (212, 222) und mindestens einer der Vielzahl von Linsengruppenbaugruppen (11, 12, 13, 14) ist, sodass relative Positionen des Bewegungsteils (212, 222) und der mindestens einen Linsengruppenbaugruppe in Richtung der optischen Achse des Kameramoduls fest sind,
wobei die Übertragungsbaugruppe (60) umfasst:
einen Verbindungsarm (61), wobei eine Erstreckungsrichtung des Verbindungsarms (61) dieselbe ist wie die Richtung der optischen Achse des Kameramoduls, ein Ende in Erstreckungsrichtung des Verbindungsarms (61) fest mit dem Bewegungsteil (212, 222) verbunden ist und das andere Ende sich zu einer Seite weg von dem Bewegungsteil (212, 222) erstreckt;
ein Verbindungsteil (63), wobei das Verbindungsteil (63) entsprechend dem Verbindungsarm (61) angeordnet ist, ein Ende fest mit der mindestens einen Linsengruppenbaugruppe verbunden ist und ein Positionierungsloch (631) an dem Verbindungsteil (63) angeordnet ist; und
eine Verbindungsstange (62), wobei ein Ende in einer Erstreckungsrichtung der Verbindungsstange (62) fest mit dem Verbindungsarm (61) verbunden ist und das andere Ende das Positionierungsloch (631) durchdringt, wobei
eine elastische Struktur auf dem Verbindungsarm (61) angeordnet ist, die elastische Struktur eine elastische Verformung in Erstreckungsrichtung der Verbindungsstange (62) erzeugen kann, und ein Ende der Verbindungsstange (62) fest mit der elastischen Struktur verbunden ist.

2. Antriebsvorrichtung nach Anspruch 1, wobei die elastische Struktur eine bogenförmige Rippenstruktur (612) auf dem Verbindungsarm ist;
der Verbindungsarm einen geraden Teil (611) und die bogenförmige Rippenstruktur umfasst;
und wenn die bogenförmige Rippenstruktur eine elastische Verformung erzeugt, sich eine Oberseite der bogenförmigen Rippenstruktur zwischen der Oberseite der bogenförmigen Rippenstruktur und einer Ebene, auf der sich der gerade Teil befindet, bewegen kann; und
ein Ende der Verbindungsstange fest auf der Oberseite der bogenförmigen Rippenstruktur angeordnet ist.

3. Antriebsvorrichtung nach Anspruch 1 oder 2, wobei eine Begrenzungsstruktur (621) auf einer Außenwandfläche der Verbindungsstange angeordnet ist und von der Außenwandfläche der Verbindungsstange vorsteht, und eine Außenwandfläche der Begrenzungsstruktur an das Verbindungsteil angrenzt, um eine Länge der Verbindungsstange, die das Positionierungsloch durchdringt, zu begrenzen.

4. Antriebsvorrichtung nach Anspruch 3, wobei die Begrenzungsstruktur eine sich verjüngende Struktur ist, die von der Außenwandfläche der Verbindungsstange vorsteht, und wobei eine Querschnittsfläche der sich verjüngenden vorstehenden Struktur von einem Ende in der Nähe des Verbindungsteils zu einem Ende in der Nähe des Verbindungsarms allmählich zunimmt.

5. Antriebsvorrichtung nach einem der Ansprüche 1 bis 4, wobei die Außenwandfläche der Verbindungsstange in Richtung der optischen Achse des Kameramoduls eng an eine Innenwandfläche des Positionierungslochs angrenzt.

6. Antriebsvorrichtung nach einem der Ansprüche 1 bis 5, wobei das Positionierungsloch ein Langloch ist, eine Erstreckungsrichtung des Langlochs senkrecht zu der Richtung der optischen Achse des Kameramoduls ist und die Verbindungsstange in Erstreckungsrichtung des Langlochs verschiebbar mit dem Langloch zusammenwirkt.

7. Kameramodul, umfassend:
eine Vielzahl von Linsengruppenbaugruppen (11, 12, 13, 14);
mindestens eine Antriebsvorrichtung (21, 22) nach einem der Ansprüche 1 bis 6, die dazu konfiguriert ist, mindestens eine der Vielzahl von Linsengruppenbaugruppen (11, 12, 13, 14) anzutreiben, zum Bewegen entlang einer Richtung der optischen Achse des Kameramoduls;
mindestens ein erstes Führungsteil (30), das sich entlang der Richtung der optischen Achse des Kameramoduls erstreckend angeordnet ist und so konfiguriert ist, dass es die mindestens eine Linsengruppenbaugruppe führt, sodass sie sich entlang der Richtung der optischen Achse des Kameramoduls bewegt; und
mindestens ein zweites Führungsteil (40), das sich entlang der Richtung der optischen Achse des Kameramoduls erstreckend angeordnet ist und dazu konfiguriert ist, ein Bewegungsteil der Antriebsvorrichtung zu führen, sodass es sich entlang der Richtung der optischen Achse des Kameramoduls bewegt.

8. Kameramodul nach Anspruch 7, wobei das mindestens eine erste Führungsteil zwei parallel zueinander angeordnete erste Führungsstangen umfasst, wobei auf der mindestens einen Linsengruppenbaugruppe zwei zu den zwei ersten Führungsstangen passende erste Verbindungslöcher angeordnet sind und die zwei ersten Führungsstangen die zwei ersten Verbindungslöcher durchdringen, um ein verschiebbares Zusammenwirken zwischen der mindestens einen Linsengruppenbaugruppe und den zwei ersten Führungsstangen zu implementieren; und
das mindestens eine zweite Führungsteil zwei parallel zueinander angeordnete zweite Führungsstangen umfasst, auf dem Bewegungsteil der mindestens einen Antriebsvorrichtung zwei zu den zwei zweiten Führungsstangen passende zweite Verbindungslöcher angeordnet sind und die zwei zweiten Führungsstangen die zwei zweiten Verbindungslöcher durchdringen, um ein verschiebbares Zusammenwirken zwischen dem Bewegungsteil der mindestens einen Antriebsvorrichtung und den zwei zweiten Führungsstangen zu implementieren.

9. Kameramodul nach Anspruch 7, wobei das mindestens eine erste Führungsteil eine erste Führungsstange und eine erste Kugelgruppe umfasst, die parallel zueinander angeordnet sind, und die erste Kugelgruppe eine Vielzahl von Kugeln umfasst, die entlang der Richtung der optischen Achse des Kameramoduls angeordnet sind; und ein erstes Verbindungsloch, das zu der ersten Führungsstange passt, und erste Schlitzrollen, die zu der ersten Kugelgruppe passen, separat auf der mindestens einen Linsengruppenbaugruppe angeordnet sind, wobei die erste Führungsstange das erste Verbindungsloch durchdringt und die erste Kugelgruppe in Rollkontakt mit den ersten Schlitzrollen ist; und
das mindestens eine zweite Führungsteil eine zweite Führungsstange und eine zweite Kugelgruppe umfasst, die parallel zueinander angeordnet sind, und die zweite Kugelgruppe eine Vielzahl von Kugeln, die entlang der Richtung der optischen Achse des Kameramoduls angeordnet sind, umfasst; und ein zweites Verbindungsloch, das zu der zweiten Führungsstange passt, und zweite Schlitzrollen, die zu der zweiten Kugelgruppe passen, separat auf dem Bewegungsteil der mindestens einen Antriebsvorrichtung angeordnet sind, die zweite Führungsstange das zweite Verbindungsloch durchdringt und die zweite Kugelgruppe in Rollkontakt mit den zweiten Schlitzrollen ist, wobei
die erste Führungsstange und die zweite Führungsstange auf derselben Seite der mindestens einen Linsengruppenbaugruppe angeordnet sind.

10. Kameramodul nach einem der Ansprüche 7 bis 9, wobei auf einer Seite des Bewegungsteils der mindestens einen Antriebsvorrichtung und nahe der mindestens einen Linsengruppenbaugruppe eine Nutstruktur gebildet ist und die mindestens eine Linsengruppenbaugruppe teilweise oder vollständig in der Nutstruktur angeordnet ist.

11. Kameramodul nach einem der Ansprüche 7 bis 10, wobei die mindestens eine Linsengruppenbaugruppe eine Zoomlinsengruppenbaugruppe und eine Fokuslinsengruppenbaugruppe umfasst und die mindestens eine Antriebsvorrichtung eine Zoomantriebsvorrichtung, die dazu konfiguriert ist, die Zoomlinsengruppenbaugruppe zum Bewegen anzutreiben, und eine Fokusantriebsvorrichtung, die dazu konfiguriert ist, die Fokuslinsengruppenbaugruppe zum Bewegen anzutreiben, umfasst; und das Kameramodul ferner umfasst:
eine Verriegelungsstruktur, die so konfiguriert ist, dass sie ein Bewegungsteil der Zoomantriebsvorrichtung verriegelt, wenn die Zoomantriebsvorrichtung nicht mehr arbeitet.

12. Elektronische Vorrichtung, umfassend die Antriebsvorrichtung nach einem der Ansprüche 1 bis 6 oder das Kameramodul nach einem der Ansprüche 7 bis 11.

## Revendications

1. Appareil d'entraînement (21, 22), utilisé dans un module de caméra, dans lequel le module de caméra comprend une pluralité d'ensembles de groupes de lentilles (11, 12, 13, 14) et l'appareil d'entraînement comprend :
une pièce d'entraînement (211, 221), configurée pour fournir une force motrice ;
une pièce mobile (212, 222), se déplaçant le long d'une direction d'axe optique du module de caméra sous l'action de la force motrice ; et
un ensemble de transmission (60), configuré pour être en liaison de transmission avec la pièce mobile (212, 222) et au moins l'un de la pluralité d'ensembles de groupes de lentilles (11, 12, 13, 14), de sorte que les positions relatives de la pièce mobile (212, 222) et l'au moins un ensemble de groupe de lentilles dans la direction de l'axe optique du module de caméra soient fixes,
dans lequel l'ensemble de transmission (60) comprend :
un bras de liaison (61), dans lequel une direction d'extension du bras de liaison (61) est la même que la direction de l'axe optique du module de caméra, une extrémité dans la direction d'extension du bras de liaison (61) est connectée de manière fixe à la pièce mobile (212, 222), et l'autre extrémité se prolonge vers un côté éloigné de la pièce mobile (212, 222) ;
une pièce de connexion (63), dans lequel la pièce de connexion (63) est disposée en correspondance avec le bras de liaison (61), une extrémité est reliée de manière fixe à l'au moins un ensemble de groupe de lentilles, et un trou de positionnement (631) est disposé sur la pièce de connexion (63) ; et
une bielle (62), dans lequel une extrémité dans une direction d'extension de la bielle (62) est reliée de manière fixe au bras de liaison (61), et l'autre extrémité pénètre dans le trou de positionnement (631), dans lequel
une structure élastique est disposée sur le bras de liaison (61), la structure élastique peut générer une déformation élastique dans la direction d'extension de la bielle (62), et une extrémité de la bielle (62) est reliée de manière fixe à la structure élastique.

2. Appareil d'entraînement selon la revendication 1, dans lequel la structure élastique est une structure de crête en forme d'arc (612) sur le bras de liaison ;
le bras de liaison comprend une pièce droite (611) et la structure de crête en forme d'arc ;
et lorsque la structure de crête en forme d'arc génère une déformation élastique, un sommet de la structure de crête en forme d'arc peut se déplacer entre le sommet de la structure de crête en forme d'arc et un plan sur lequel se trouve la pièce droite ; et
une extrémité de la bielle est disposée de manière fixe sur le dessus de la structure de crête en forme d'arc.

3. Appareil d'entraînement selon la revendication 1 ou 2, dans lequel une structure de limite (621) est disposée sur une surface de paroi extérieure de la bielle, et fait saillie à partir de la surface de paroi extérieure de la bielle, et une surface de paroi extérieure de la structure de limite bute contre la pièce de connexion, pour limiter une longueur de la bielle qui pénètre dans le trou de positionnement.

4. Appareil d'entraînement selon la revendication 3, dans lequel la structure de limite est une structure en saillie conique faisant saillie depuis la surface de paroi extérieure de la bielle, et une section transversale de la structure en saillie conique augmente progressivement d'une extrémité proche de la pièce de connexion à une extrémité proche du bras de liaison.

5. Appareil d'entraînement selon l'une quelconque des revendications 1 à 4, dans lequel la surface de paroi extérieure de la bielle vient en butée étroite contre une surface de paroi intérieure du trou de positionnement dans la direction de l'axe optique du module de caméra.

6. Appareil d'entraînement selon l'une quelconque des revendications 1 à 5, dans lequel le trou de positionnement est un trou oblong, une direction d'extension du trou oblong est perpendiculaire à la direction de l'axe optique du module de caméra, et la bielle coopère de manière coulissante avec le trou oblong dans la direction d'extension du trou oblong.

7. Module de caméra, comprenant :
une pluralité d'ensembles de groupes de lentilles (11, 12, 13, 14) ;
au moins un appareil d'entraînement (21, 22) selon l'une quelconque des revendications 1 à 6, configuré pour entraîner au moins l'un de la pluralité d'ensembles de groupes de lentilles (11, 12, 13, 14) pour se déplacer le long d'une direction d'axe optique du module de caméra ;
au moins une première pièce de guidage (30), disposée se prolongeant le long de la direction de l'axe optique du module de caméra, et configurée pour guider l'au moins un ensemble de groupe de lentilles pour se déplacer le long de la direction de l'axe optique du module de caméra ; et
au moins une seconde pièce de guidage (40), disposée se prolongeant le long de la direction de l'axe optique du module de caméra, et configurée pour guider une pièce mobile de l'appareil d'entraînement pour se déplacer le long de la direction de l'axe optique du module de caméra.

8. Module de caméra selon la revendication 7, dans lequel l'au moins une première pièce de guidage comprend deux premières tiges de guidage disposées parallèlement l'une à l'autre, deux premiers trous de connexion s'adaptant aux deux premières tiges de guidage sont disposés sur l'au moins un ensemble de groupe de lentilles, et les deux premières tiges de guidage pénètrent dans les deux premiers trous de connexion pour mettre en œuvre une coopération coulissante entre l'au moins un ensemble de groupe de lentilles et les deux premières tiges de guidage ; et l'au moins une seconde pièce de guidage comprend deux secondes tiges de guidage qui sont disposées parallèlement l'une à l'autre, deux seconds trous de connexion s'adaptant aux deux secondes tiges de guidage sont disposés sur la pièce mobile de l'au moins un appareil d'entraînement, et les deux secondes tiges de guidage pénètrent dans les deux seconds trous de connexion, pour mettre en œuvre une coopération coulissante entre la pièce mobile de l'au moins un appareil d'entraînement et les deux secondes tiges de guidage.

9. Module de caméra selon la revendication 7, dans lequel l'au moins une première pièce de guidage comprend une première tige de guidage et un premier groupe de billes disposés parallèlement l'un à l'autre, et le premier groupe de billes comprend une pluralité de billes disposées le long de l'axe optique du module de caméra ; et un premier trou de connexion s'adaptant à la première tige de guidage et un premier roulement à fente s'adaptant au premier groupe de billes sont disposés séparément sur l'au moins un ensemble de groupe de lentilles, la première tige de guidage pénètre dans le premier trou de connexion et le premier groupe de billes est en contact roulant avec le premier roulement à fente ; et
l'au moins une seconde pièce de guidage comprend une seconde tige de guidage et un second groupe de billes disposés parallèlement l'un à l'autre, et le second groupe de billes comprend une pluralité de billes disposées le long de la direction de l'axe optique du module de caméra ; et un second trou de connexion s'adaptant à la seconde tige de guidage et un second roulement à fente s'adaptant au second groupe de billes sont disposés séparément sur la pièce mobile de l'au moins un appareil d'entraînement, la seconde tige de guidage pénètre dans le second trou de connexion, et le second groupe de billes est en contact roulant avec le second roulement à fente, dans lequel la première tige de guidage et la seconde tige de guidage sont disposées sur un même côté de l'au moins un ensemble de groupe de lentilles.

10. Module de caméra selon l'une quelconque des revendications 7 à 9, dans lequel une structure de rainure est formée sur un côté de la pièce mobile de l'au moins un appareil d'entraînement et qui est proche de l'au moins un ensemble de groupe de lentilles, et l'au moins un ensemble de groupe de lentilles est partiellement ou complètement disposé dans la structure de rainure.

11. Module de caméra selon l'une quelconque des revendications 7 à 10, dans lequel l'au moins un ensemble de groupe de lentilles comprend un ensemble de groupe de lentilles zoom et un ensemble de groupe de lentilles de mise au point, et l'au moins un appareil d'entraînement comprend un appareil d'entraînement de zoom configuré pour entraîner l'ensemble de groupe de lentilles zoom en mouvement, et un appareil d'entraînement de mise au point configuré pour entraîner l'ensemble de groupe de lentilles de mise au point en mouvement ; et le module de caméra comprend également :
une structure de verrouillage, configurée pour verrouiller une pièce mobile de l'appareil d'entraînement de zoom lorsque l'appareil d'entraînement de zoom cesse de fonctionner.

12. Dispositif électronique, comprenant l'appareil d'entraînement selon l'une quelconque des revendications 1 à 6, et le module de caméra selon l'une quelconque des revendications 7 à 11.
